# EUROPEAN PATENT APPLICATION

(11) **EP 4 624 322 A1**
(43) Date of publication of application: **01.10.2025**
(21) Application number: 25159539.3
(22) Date of filing: 22.02.2025
(51) Int. Cl.: B64C 1/14, B64D 45/00, E05C 9/00

(54) **DOOR ASSEMBLY WITH AN ENGAGEMENT ASSEMBLY**

(30) Priority: 28.03.2024 US 202418619418
(71) Applicant: The Boeing Company, Arlington, VA 22202 (US); Harper Engineering Company, Renton, Washington 98057 (US)
(72) Inventor: RHYNARD, Steven Ellis, ARLINGTON, 22202 (US); NUNES, Daniel Bryan, ARLINGTON, 22202 (US); KIRIAKOS, Emad Said, ARLINGTON, 22202 (US); CHADWELL, David Lee, RENTON, 98057 (US); DOANE, Eric, RENTON, 98057 (US)
(74) Representative: Plasseraud IP

(57) **Abstract**

A door assembly configured to be mounted in an opening of a cabin area of an aircraft. The door assembly includes a door configured to be movable between a deployed position across the opening and a stowed position out of the opening. A lock is mounted to the door and movable between a locked position and an unlocked position. An engagement assembly is mounted to the door and movable between an engaged position and a disengaged position. The engagement assembly includes a plunger, a lock mechanism, and an elongated member that extends between the lock and the lock mechanism. In the engaged position, the lock mechanism and the elongated member position the plunger in an extended position outward from the door. In the disengaged position, the lock mechanism and the elongated member position the plunger in a retracted position relative to the door.

## Description

### TECHNOLOGICAL FIELD

The present disclosure relates generally to the field of aircraft and, more specifically, to a barrier door with a floor engagement assembly.

### BACKGROUND

Aircraft have a flight deck that includes flight instruments, instrument panels, and various controls that enable the flight crew to operate the aircraft. The flight deck is positioned towards the front of the aircraft and is usually a separate compartment away from the cabin area. A flight deck door further secures the flight deck and when closed isolates the flight deck from the cabin area.

The flight deck door is closed and locked during flight. This allows the flight crew to concentrate on operating the aircraft and prevents entry of unauthorized persons onto the flight deck. However, the flight deck door may be opened during flight for various reasons. One occurrence is when one of the flight crew use the lavatory which is located in the cabin area of the aircraft. Other occurrences include but are not limited to when food and/or drinks that are prepared in the galley of the cabin area are delivered to the flight crew on the flight deck, and when flight crew leave the flight deck during a break.

Opening of the flight deck door could present an opportunity for an un-authorized person to gain entry to the flight deck. A physically installed system is needed that would inhibit and/or sufficiently delay a person in the cabin area from reaching the flight deck door when the flight deck door is open. The delay in their movement towards the flight deck would allow the flight deck door to be closed and locked prior to the person reaching the door.

### SUMMARY

One aspect is directed to a door assembly according to claim 1.

Another aspect is directed to a method according to claim 14.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an example aircraft.
Figure 2 is a top schematic view of an example barrier door mounted in an opening.
Figure 3A is an isometric view of an example barrier door in an open position and folded within a frame.
Figure 3B is an isometric view of the example barrier door of Figure 3A in a partially closed position and extending partially across the opening.
Figure 3C is an isometric view of the example barrier door of Figure 3A in a closed position and extending fully across the opening.
Figure 4A is a front view of an example lock in a closed position.
Figure 4B is a rear view of the example lock of Figure 4A in the closed position.
Figure 5A is an isometric front view of the example lock of Figure 4A in an open position.
Figure 5B is an isometric rear view of the example lock of Figure 4A in an open position.
Figure 6 is an example flowchart diagram of operating method of a barrier door.
Figure 7 is an example flowchart diagram of operating method of a barrier door.
Figure 8A is a schematic diagram of an example engagement member in a disengaged position.
Figure 8B is a schematic diagram of the example engagement member of Figure 8A in an engaged position.
Figure 9A is a schematic side view of an example engagement member in a disengaged position.
Figure 9B is a schematic side view of the example engagement member of Figure 9A in an engaged position.
Figure 10 is a side view of an example cam member connected in an overlapping arrangement to a rotary bolt.
Figure 11A is a side view of the example lock bar assembly in a first position that prevents rotation of the cam member.
Figure 11B is a side view of the example lock bar assembly of Figure 11A in a second position that enables rotation of the cam member.
Figure 12 is a schematic section view of an example damper.
Figures 13A-13C are side views of the example lock bar assembly and delay assembly in different positions to control the positioning of the frame.
Figure 14 is a side view of an example catch that engages with a delay assembly.
Figure 15 is an enlarged partial side view of the example catch of Figure 14.
Figure 16 is a side view of an example catch in an unlocked position to enable a frame of a lock bar assembly to move downward.
Figure 17 is a side view of the example catch of Figure 16 now in a locked position in contact with the frame of the lock bar assembly.
Figure 18 is a partial cut-away view of example fasteners mounted to a strike section of a lock.
Figure 19 is a schematic diagram of an example door assembly mounted in an opening.
Figure 20 is a front view of an example floor engagement assembly.
Figure 21A is a front view of an example floor engagement assembly mounted to a barrier door.
Figure 21B is a rear view of the example barrier door and floor engagement assembly of the barrier door of Figure 21A.
Figure 22 is a front view of an example arm of a floor engagement assembly engaged with a lock.
Figure 23 is a front view of an example locking mechanism having a single plunger.
Figure 24 is a front view of an example locking mechanism having a pair of plungers.
Figure 25 is an exploded view of an example housing of a lock mechanism that includes a first section and a second section.
Figure 26 is a schematic diagram of an example floor engagement assembly that is mounted on a barrier door.
Figure 27 is an example flowchart diagram of operating method of a barrier door.
Figure 28 is a schematic diagram of an example barrier door equipped with a floor engagement assembly mounting in an opening in an aircraft.
Figure 29 is a schematic diagram of an example door assembly that includes a barrier door equipped with a floor engagement assembly and mounted in a frame.
Figure 30 is a side view of an example plunger of a lock mechanism engaged with a receptacle in a threshold.

### DETAILED DESCRIPTION

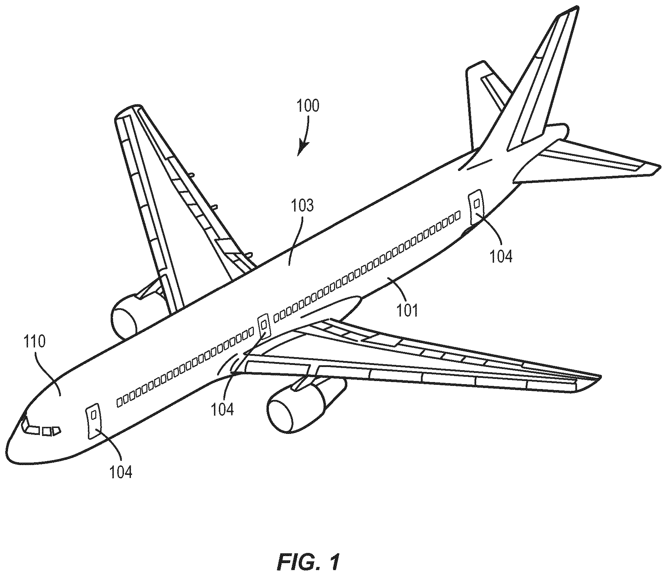

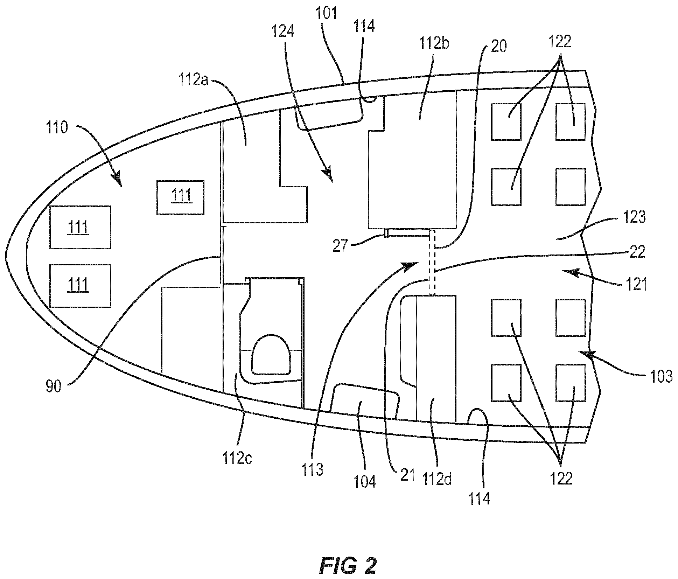

Figures 1 and 2 illustrate an aircraft 100 configured to transport passengers. The aircraft 100 includes a fuselage 101 with a flight deck 110 positioned at the front and a cabin area 103 positioned rearward. The cabin area 103 is equipped for accommodating the passengers. The size of the flight deck 110 and the cabin area 103 can vary depending upon the aircraft 100. One or more exterior doors 104 provide for passengers and the flight crew to enter and exit the fuselage 101.

The flight deck 110 includes one or more seats 111 for flight crew including but not limited to the pilot and co-pilot. Various controls and instrument panels (not illustrated) are located for use by the flight crew to control the aircraft 100. A flight deck door 90 separates the flight deck 110 from the cabin area 103. The flight deck door 90 prevents unauthorized persons from entering the flight deck 110 from the cabin area 103. The flight deck door 90 can include a lock to secure the door 90 in the closed position.

Monuments 112 are mounted to the structural members of the aircraft 100 within the fuselage 101. The monuments 112 are shaped and sized for a function with examples including but not limited to galleys, lavatories, walls, and stowage units. In some examples, the monuments 112 are shaped and sized to extend from the floor to the ceiling of the cabin area 103, and between a wall 114 of the fuselage 101 to an aisle 123.

The cabin area 103 is positioned along the fuselage 101 rearward of the flight deck 110. The cabin area 103 includes a crew section 124 and a passenger section 121. The crew section 124 is positioned immediately aft of the flight deck 110. In some examples, the crew section 124 is positioned at one of the exterior doors 104 and includes space to allow for passengers to enter and exit the aircraft 100. Additionally or alternatively, the crew section 124 provides an area for the flight crew such as flight attendants to sit during takeoff and landing, for the flight crew to prepare food/drinks, and for passengers to access a lavatory. Figure 2 includes the crew section 124 having a pair of galley monuments 112a, 112b, a lavatory monument 112c, and a stowage monument 112d.

In the example of Figure 2, the passenger section 121 is positioned aft of the crew section 124. The passenger section 121 is configured to accommodate the passengers and includes seats 122 arranged in rows along one or more aisles 123. In some examples such as a commercial airline, the seats 122 extend throughout the passenger section 121.

The cabin area 103 can include a wide variety of configurations. In some examples the aircraft 100 is used to transport cargo and includes a limited number of seats 122 in the cabin area 103. In some examples the cabin area 103 does not include a crew section 124 with the passenger section 121 including the seats 122 extending directly behind the flight deck 110.

One or more openings 113 form walkways for passengers and flight crew to move within the cabin area 103. In some examples as illustrated in Figure 2, the openings 113 are formed between the monuments 112. Figure 2 illustrates a layout with an opening 113 that extends between the crew section 124 and the passenger section 121. Other examples include openings 113 formed between various components, such as monuments 112, walls 114, and seats 122.

A barrier door 20 extends across the opening 113 to delay and/or prevent a passenger in the passenger section 121 from moving through an opening 113 and gaining access to the flight deck 110. The barrier door 20 is movable between a stowed position (shown in solid lines in Figure 2) and a deployed position (also referred to as closed position) across the opening 113 (shown in dashed lines in Figure 2). In the stowed position, the barrier door 20 is folded and positioned in a frame 27. This allows for persons to move through the opening 113 such as during boarding and deplaning. In the deployed position, the barrier door 20 is in an extended configuration that extends across the opening 113. This prevents and/or delays a person in the passenger section 121 from moving through the opening 113 and gaining access to the flight deck 110.

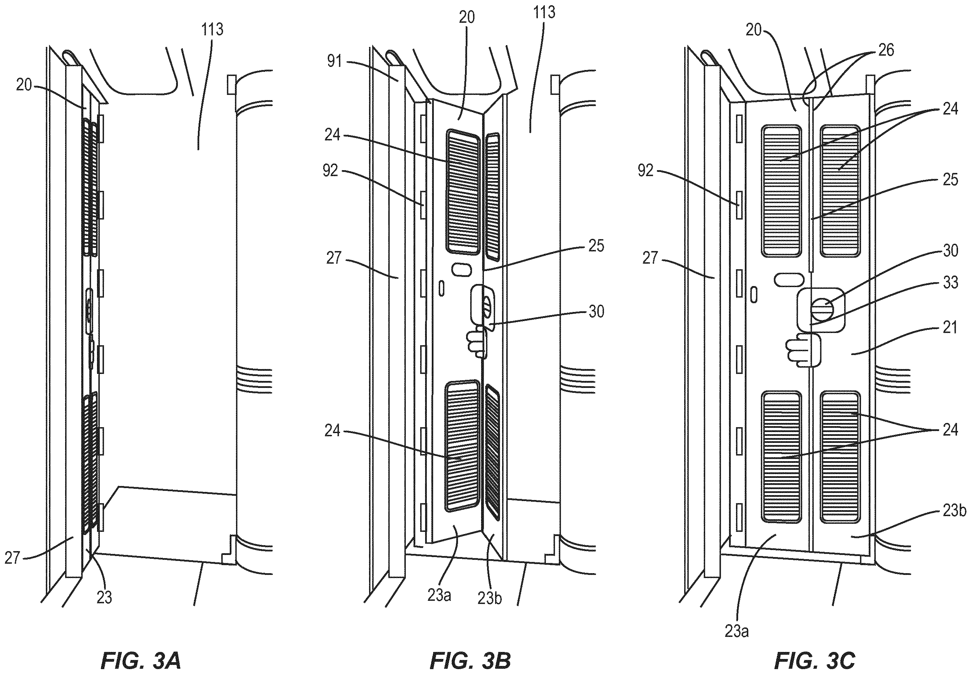

The barrier door 20 is constructed from panels 23 that are hingedly connected together. The number and configuration of the panels 23 can vary. For example, as shown in Figures 3A-3C, the barrier door 20 comprises two panels - first panel 23a and second panel 23b. Figures 3A, 3B, and 3C illustrate the barrier door 20 moving from a stowed position (Figure 3A), to a partially deployed position (Figure 3B) to a deployed position (Figure 3C). In the stowed position (Figure 3A) the panels 23 are folded together and out of the opening 113. The panels 23 may be completely out of the opening 113 such as within the frame 27 or folded and stored at one side of the opening 113. In the deployed position (Figure 3C), the panels 23 are unfolded to extend across the opening 113.

In some examples, the panels 23 are constructed from a rigid material (e.g., composite material, plastic) and have a fixed shape. The panels 23 can include various shapes and sizes including substantially rectangular as shown. In some examples as illustrated in Figure 3C, the panels 23 are sized to extend across the entire opening 113 such that there are no gaps when in the deployed position. In other examples, one or more small gaps are formed along the outer edges of the panels 23. In some examples, the panels 23 have the same shape and size to completely overlap in the folded configuration. In other examples the panels 23 include different shapes and/or sizes. One or more windows 24 can be positioned on one or both panels 23. The windows 24 include bars, protective transparent material, or other structures to prevent a passenger from crawling through when the barrier door 20 is closed.

In some examples, the barrier door 20 includes one or more hinges 25 to enable pivoting movement of the panels 23. In the example best shown in Figures 3B and 3C, the panels 23 are connected by a hinge 25 that is positioned at the inner edges 26. The hinge 25 can extend along a single continuous section of the inner edges 26 or can include two or more discrete sections. In some examples, the hinge 25 provides for the panels 23 to be parallel in the folded configuration. This minimizes the overall size of the barrier door 20 when in the stowed position to provide for persons to pass through the opening 113. In some examples, the hinge 25 aligns the panels 23 in a co-linear position in the extended configuration to extend across the opening 113. In other examples the panels 23 are positioned at different relative angular positions in the folded and extended configurations. The hinge 25 can include various configurations, including but not limited to a piano hinge.

In the deployed position, the barrier door 20 includes a front side 21 (i.e., crew side, or first side) that faces forward into the crew section 124 and towards the flight deck 110. The barrier door 20 also includes a rear side 22 (i.e., passenger side, or second side) that faces rearward towards the passenger section 121 (see Figure 2). The barrier door 20 is mounted to the frame 27 by one or more frame hinges 92. In some examples, the frame hinge 92 and one or more hinges 25 are positioned on the front side 21 of the barrier door 20 (i.e., in the crew section 124). This allows the barrier door 20 to more effectively resist loads applied from the passenger section 121 toward the flight deck 110.

The barrier door 20 includes a lock 30 that secures the panels 23 in the extended configuration when deployed across the opening 113. As illustrated in Figure 3C, the lock 30 is positioned on two adjacent panels 23. The lock 30 includes a hinged design to enable pivoting movement of the panels 23 when moving between the folded and extended configurations. The lock 30 includes a hinge 33 that is aligned with the hinge 25 of the barrier door 20. The hinge 33 enables the lock 30 to move between folded and unfolded configurations. This enables the lock 30 to pivot during movement of the barrier door 20.

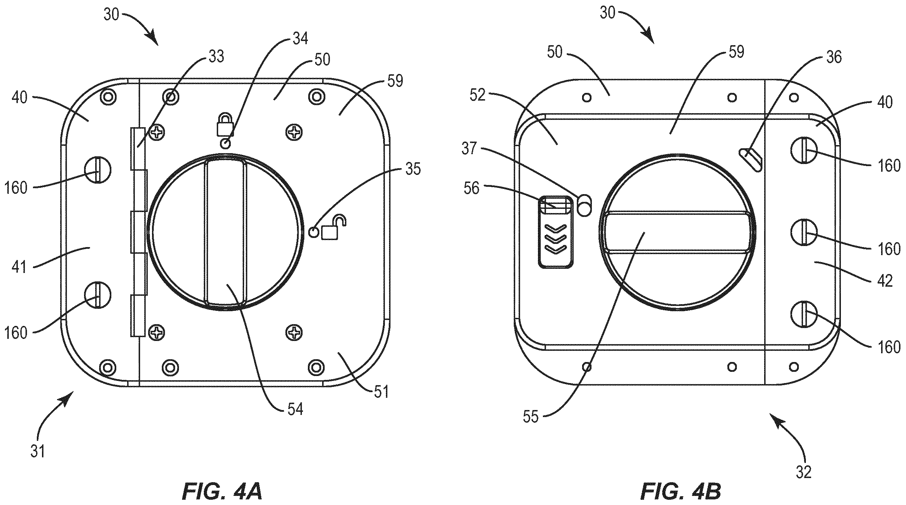

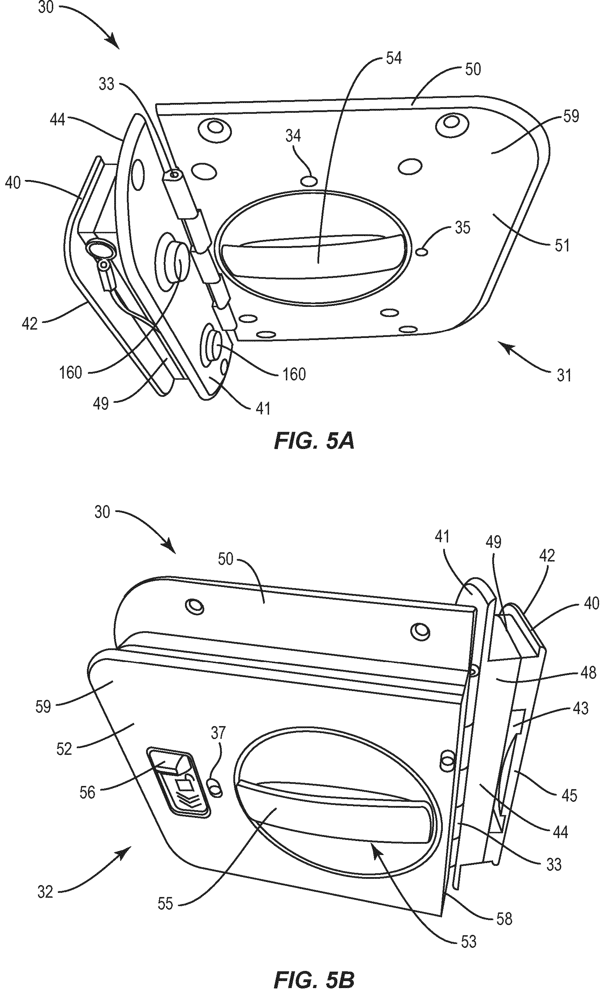

In some examples, the lock 30 includes a first section and a second section that are pivotally connected together to enable folding. As illustrated in Figures 4A, 4B, 5A, and 5B, the lock 30 includes a strike section 40 and a latch section 50. The hinge 33 is connected to and enables the pivoting movement between the strike section 40 and the latch section 50. When the lock 30 is mounted to the barrier door 20, the strike section 40 is connected to a first panel 23 (e.g., first panel 23a) and the latch section 50 is connected to a second panel 23 (e.g., second panel 23b). The hinge 33 is aligned with the hinge 25 that connects the first and second panels 23a and 23b. In some examples, the hinges 25, 33 are aligned in a straight line.

Figure 4A illustrates a front side 31 (i.e., cabin side that faces into the crew section 124) of the lock 30 in a closed position and Figure 4B illustrates a rear side 32 (i.e., side that faces into the passenger section 121) of the lock 30 in the closed position. For example, the front side 31 of the lock 30 corresponds to the front side 21 of the barrier door 20, and the rear side 32 of the lock 30 corresponds to the rear side 22 of the barrier door 20. The strike section 40 and the latch section 50 are aligned together in the closed position, such as in a coplanar alignment. This closed position occurs when the lock 30 is locked and the barrier door 20 is in the extended configuration.

Figure 5A illustrates the front side 31 of the lock 30 in an open position and Figure 5B illustrates the rear side 32 of the lock 30 in the open position. The strike section 40 and the latch section 50 are in a transverse orientation. The extent of the angular alignment between the strike section 40 and latch section 50 can vary. The open position includes the front sides 41, 51 of the strike section 40 and latch section 50 facing generally together with the rear sides 42, 52 generally facing away from each other.

In some examples, the hinge 33 is mounted to the front side 31 of the lock 30. This exposes the hinge 33 to the crew section 124 when the barrier door 20 is in the deployed position. This prevents a passenger in the passenger section 121 from tampering with the hinge 33 when the barrier door 20 is in the deployed position.

In some examples, the strike section 40 includes a body 49 with a front side 41, a rear side 42, and an inner face 48. A receptacle 43 extends into the inner face 48. The front side 41 can include a flange that extends over the panel 23. In some examples, the strike section 40 has a two-piece construction with a front section 44 and a rear section 45 that are in an overlapping configuration. The receptacle 43 is positioned at the intersection of the front section 44 and the rear section 45. Fasteners 160 extend through openings in each of the front section 44 and rear section 45 to connect the two sections together. In some examples, one or more fasteners 160 are mounted from each of the front side 31 and the rear side 32 of the lock 30. In other examples, fasteners 160 extend into the lock 30 from just the front side 31 to prevent tampering by a passenger when the lock is in the closed position.

In some examples, the latch section 50 includes a body 59 and has a front side 51 and a rear side 52. The body 59 includes an inner face 58 at the hinge 33. When the lock 30 is in the closed position, the inner faces 48, 58 face together. In some examples, the inner faces 48, 58 abut together in closed position, with other examples including the faces 48, 58 spaced apart. The latch section 50 includes a handle 53. The handle 53 includes a front handle 54 at the front side 51 and a rear handle 55 at the rear side 52.

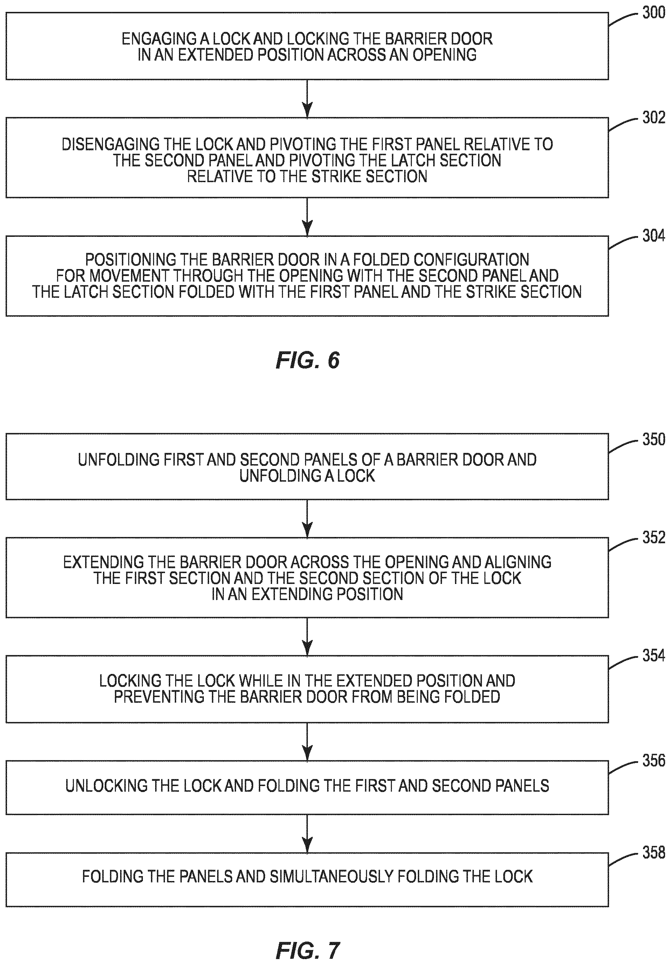

Figure 6 illustrates an example method of operating the barrier door 20. For example, a method of locking the barrier door 20. The method includes engaging the lock 30 and locking the barrier door 20 in the extended position across the opening 113 (block 300). The lock 30 includes the latch section 50 on second panel 23 (e.g., second panel 23b) of the barrier door 20 and the strike section 40 on a first panel 23 (e.g., first panel 23a). At some point thereafter, the lock 30 is disengaged and the first panel 23 is pivoted relative to the second panel 23 and also pivoting the latch section 50 relative to the strike section 40 (block 302). The barrier door 20 is placed in the folded configuration to allow movement through the opening 113 and the second panel 23 and the latch section 50 are folded with the first panel 23 and the strike section 40 (block 304). In this method, the foldable nature of the lock 30 does not interfere with the folding action of the barrier door 20. Rather, the lock 30 folds with the panels 23 as the barrier door 20 is moved from the extended configuration (deployed configuration) to the folded configuration (stowed configuration).

Figure 7 illustrates another example method of operating the barrier door 20. For example, the method includes unfolding the first panel 23 (e.g., first panel 23a) and second panel 23 (e.g., second panel 23b) of the barrier door 20 and unfolding the lock 30 (block 350). The lock 30 includes a first section attached to the first panel 23 and a second section attached to the second panel 23. The barrier door 20 is extended across the opening 113 and aligning the first section and the second section of the lock 30 to an extended position (block 352). The method also includes locking the lock 30 while in the extended position and preventing the barrier door 20 from being folded (block 354). At some point thereafter, the method unlocks the lock 30 and the first panel 23 and the second panel 23 are folded (block 356). While folding the panels 23, the lock 30 is also folded (block 358).

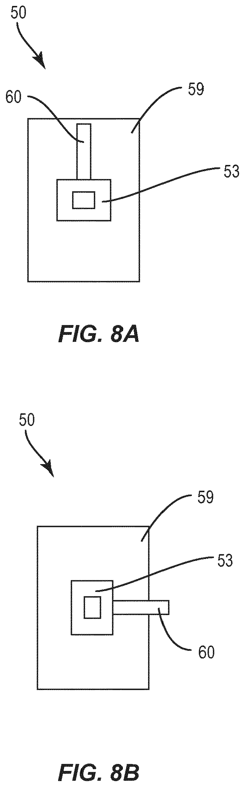

In some examples, the lock 30 includes a rotary bolt 60. The rotary bolt 60 is moved by rotation of the handle 53 between locked and unlocked positions. As schematically illustrated in Figures 8A and 8B, the rotary bolt 60 is mounted to the latch section 50. In some examples, the rotary bolt 60 is positioned within the perimeter of the body 59, with other examples being positioned at different arrangements. The rotary bolt 60 is movable between a disengaged position and an engaged position. In the disengaged position of Figure 8A, the rotary bolt 60 is positioned to be disengaged from the strike section 40. In some examples, this includes the rotary bolt 60 recessed within the perimeter of the body 59. In the engaged position of Figure 8B, the rotary bolt 60 is positioned to engage with the strike section 40. In some examples, the engaged position includes the rotary bolt 60 extending outward from the body 59 and positioned to be inserted into the strike section 40. The handle 53 is operatively connected to the rotary bolt 60 to rotate the rotary bolt 60 between the engaged and disengaged positions.

The lock 30 is configured to be selectively movable between locked and unlocked positions by rotating the handle 53. The lock 30 is positioned to be locked when the strike section 40 and the latch section 50 are aligned in a substantially planar arrangement. Once aligned, the handle 53 is rotated to move the rotary bolt 60 from the disengaged position to the engaged position. To unlock the lock 30, the handle 53 is rotated to disengage the rotary bolt 60. Once unlocked, the panels 23 and the lock 30 can be folded and moved to enable persons to move through the opening 113.

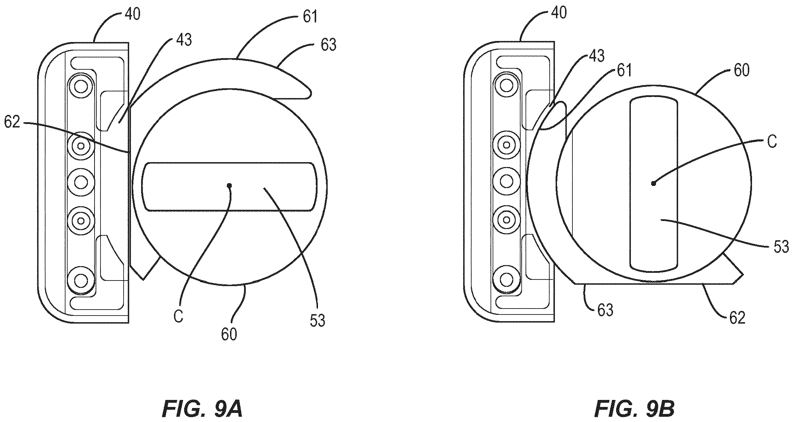

The rotary bolt 60 is rotatably mounted to the body 59 of the latch section 50. Figures 9A and 9B illustrate the rotary bolt 60 that rotates about a center point C and moves relative to the strike section 40. The rotary bolt 60 includes an outer perimeter 63 with an extension section 61 and a flat section 62. In the unlocked position as illustrated in Figure 9A, the rotary bolt 60 is in a rotational position with the flat section 62 positioned at the receptacle 43 of the strike section 40. The flat edge aligns with the edge of the receptacle 43 but does not extend into the receptacle 43. This is the unlocked position of the lock 30 as the rotary bolt 60 does not engage with the strike section 40.

In the locked position as illustrated in Figure 9B, the rotary bolt 60 is at a rotational position with the extension section 61 positioned at the receptacle 43. The larger radius measured from the center point C of the extension section 61 relative to the flat section 62 causes the extension section 61 to extend into the receptacle 43. This engagement locks the lock 30 and prevents pivoting of the hinge 33. This prevents the panels 23 likewise from folding and the opening of the barrier door 20. In the locked position the flat section 62 is positioned away from the receptacle 43.

The front handle 54 is directly connected to the rotary bolt 60. A rotational force applied by a user to the front handle 54 enables rotation of the rotary bolt 60 between the locked and unlocked positions. This direct connection enables a crew member on the on the front side 21 of the barrier door 20 to rotate the front handle 54 and lock and/or unlock the lock 30. This enables the crew member to quickly lock the barrier door 20 in the event of an issue. This also enables a crew member to quickly unlock the barrier door 20 to access the passenger section 121.

In some examples, the rear handle 55 is connected to the rotary bolt 60 through a delay assembly 140 that includes a cam member 70 and a lock bar assembly 80. This configuration delays unlocking the lock 30 from the passenger section 121 as rotation of the rear handle 55 to unlock the lock 30 is prevented until expiration of a time delay. Once the time delay has expired, the passenger is able to rotate the rear handle 55 and unlock the lock 30 and open the barrier door 20. This time delay provides time for the crew members to move into the flight deck 110 as needed and to close and lock the flight deck door 90.

As described below, when front handle 55 is rotated, the boss 64 travels along the slot 71 thus allowing the front handle 55 to rotate between locked and unlocked positions without contacting cam member 70, and by extension not moving rear handle 54. In some examples, the front handle 55 rotates a total of 90 degrees during operation. The rear handle 54, when permitted by the delay assembly 140 to rotate to the unlocked position, rotates an amount (e.g., 90 degrees) to make the boss 64 reach the end of slot 71. After this initial rotation, an additional amount of rotation (e.g., 90 degrees) rotates both handles together to the unlocked position. The rear handle 54 rotates both the initial and subsequent rotational amounts. In one example, the rear handle 54 rotates a total of 180 degrees during operation.

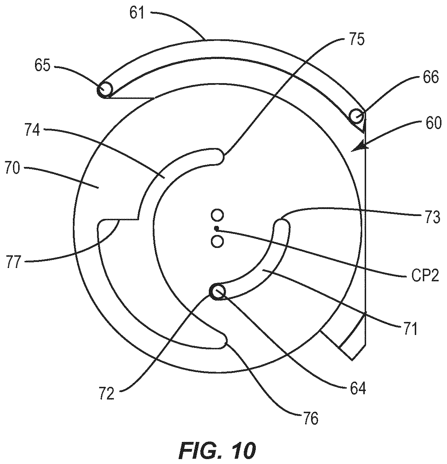

Figure 10 illustrates the cam member 70 positioned in an overlapping arrangement with the rotary bolt 60. The cam member 70 includes a center point CP2 that is aligned with a center point of the rotary bolt 60. Both components rotate about the same axis that extends through the center points. The cam member 70 includes a first slot 71 and a second slot 74. A boss 64 that extends from the rotary bolt 60 extends into the slot 71. In some examples, the cam member 70 is relatively flat, thin shape with an inner face that is aligned parallel with a face of the rotary bolt 60.

Slot 71 has a relatively uniform width along its length between the opposing ends 72, 73. The width corresponds to the width of the boss 64 to enable movement of the boss 64 between the ends 72, 73 during rotation of the rotary bolt 60. Slot 74 includes a first end 75 and a second end 76. The slot 74 includes a contact surface 77 positioned between the first end 75 and second 76. A width of the slot varies with a tapered shape between the end 76 and contact surface 77 and a substantially constant width between the contact surface 77 and the first end 75.

During rotation of the front handle 54 by a crew member, the rotary bolt 60 is rotated causing the boss 64 to move along the slot 71. This configuration enables locking and unlocking the lock 30 without delay. A lock bar assembly (not illustrated in Figure 10) is configured to engage with the cam member 70 and provide the time delay when unlocking the lock 30 using the rear handle 55.

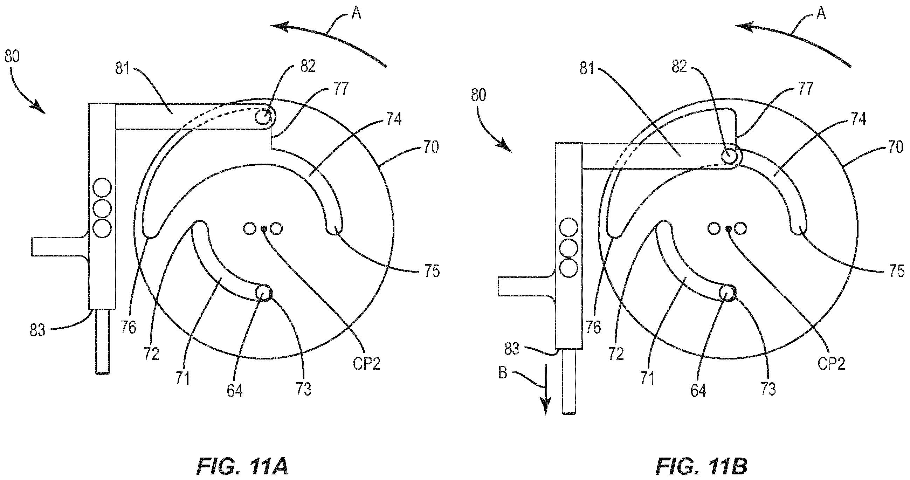

The lock bar assembly 80 is illustrated in Figures 11A and 11B (the rotary bolt 60 is not shown in these Figures). The lock bar assembly 80 includes a frame 81 that is positioned adjacent to the cam member 70. A boss 82 extends outward from the frame 81. The lock bar assembly 80 prevents rotation of the cam member 70 in the direction of arrow A because of the contact between the boss 82 and the contact surface 77. This in turn prevents rotation of the attached rotary bolt 60 and rear handle 55. This contact prevents the cam member 70 to be rotated to the unlocked position. To enable unlocking, the passenger applies a force in the direction of arrow B to move the frame 81 and boss 82 downward relative to the cam member 70. As illustrated in Figure 11B, the force moves the boss 82 downward along the contact surface 77 and into alignment with the slot 74. Once aligned, the passenger is able to rotate the rear handle 55 and rotary bolt 60 as the boss 82 is able to move into slot 74. This rotation unlocks the lock 30.

In some examples, the lock bar assembly 80 further includes a delay assembly 140 configured to delay the movement of the frame 81 downward to align the boss 82 with the slot 74 (and to unlock the lock 30). As illustrated in Figures 4B and 5B, the rear side 52 of the latch section 50 includes a button 56. The button 56 enables a user to apply a force (e.g., a downward force) to move the frame 81 relative to the cam member 70 and unlock the lock 30. The delay assembly 140 is configured for the passenger to apply the force for an extended time period to move the frame 81 downward. In one example, the passenger is required to apply the force for at least seven seconds to move the frame 81 to align the boss 82 with the slot 74.

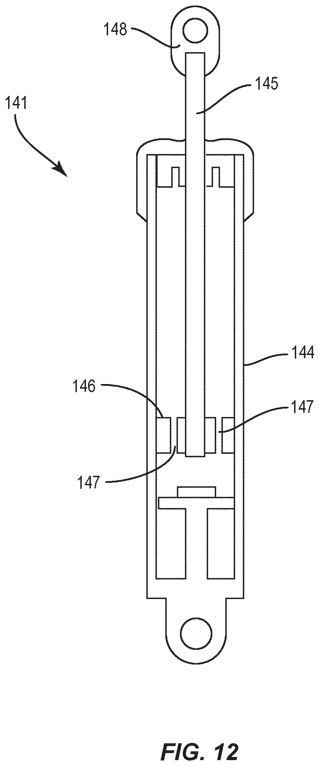

As illustrated in Figure 12, the delay assembly 140 includes one or more dampers 141. The dampers 141 include a cylinder 144 that holds a fluid. A piston 148 that includes a rod 145 and a head 146 is movable relative to the cylinder 144. Openings 147 in the head 146 provide for the fluid to pass through the head 146 during movement of the piston 148. The delay assembly 140 also includes springs 142, 143 that act on the frame 81 and/or damper 141.

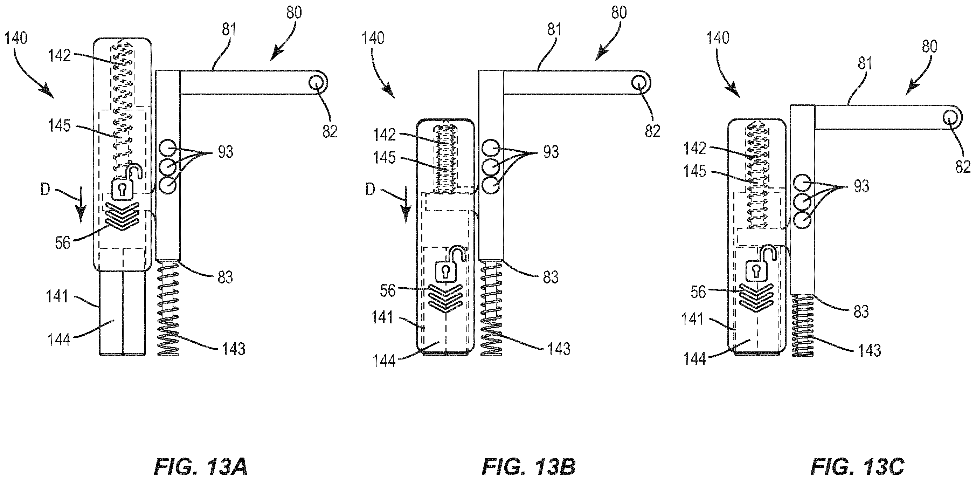

Figures 13A-13C illustrate the movement of the frame 81 and interaction of the delay assembly 140. The passenger applies a force D on the button 56 that is connected to the frame 81. This force causes the rod 145 to move into the cylinder 144. The movement is slowed due to the displacement of the fluid through the holes in the head 146 as the piston 148 moves into the cylinder 144. The frame 81 is connected to the piston 148 and moves downward as the piston 148 moves into the cylinder 144. After the passenger applies the force for a period of time, the piston 148 and the frame 81 move such that the boss 82 on the frame 81 aligns with the slot 74 in the engagement member (see Figure 11B). At this position, the rear handle 55 can be rotated by the passenger to unlock the lock 30. Once the lock 30 is unlocked, the passenger releases the button 56. The springs 142, 143 apply a force to move the piston 148 and attached frame 81 upward to the starting position (see Figure 11A).

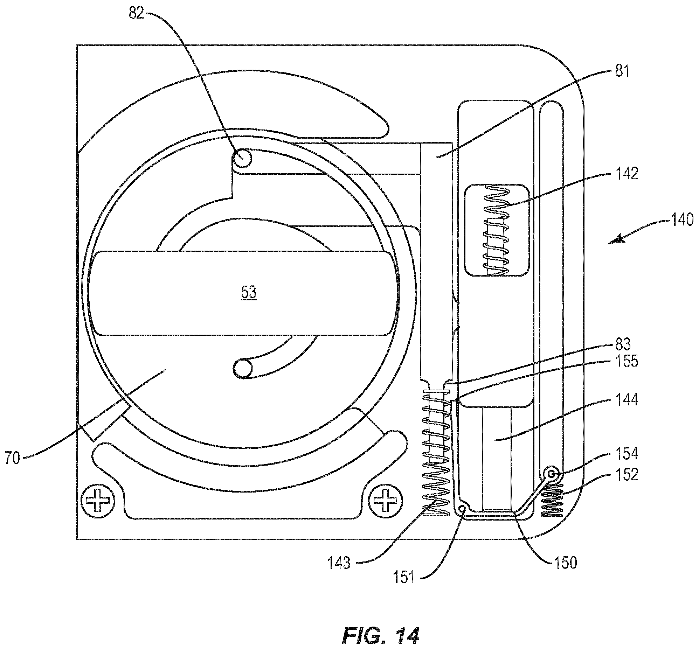

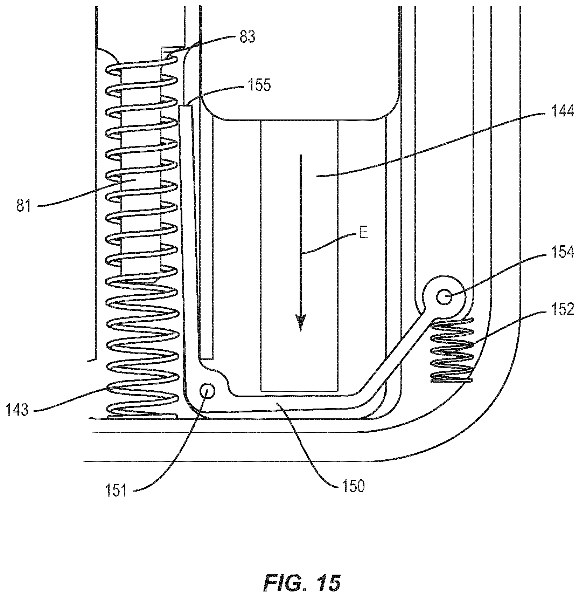

In some examples, the delay assembly 140 includes a catch 150 configured to prevent the lock 30 from being unlocking the lock 30 in the event of failure of the damper 141. As illustrated in Figures 14 and 15, the delay assembly 140 includes the catch 150. The catch 150 is mounted adjacent to the lock bar assembly 80 and pivots about a pivot connection 151. The catch 150 includes a substantially "L" shape with a first leg having a first end 154 and a second leg having a second end 155. A spring 152 applies a force (e.g., upward force) at the first end 154 to position the catch 150 at a first pivot position as illustrated in Figures 14 and 15.

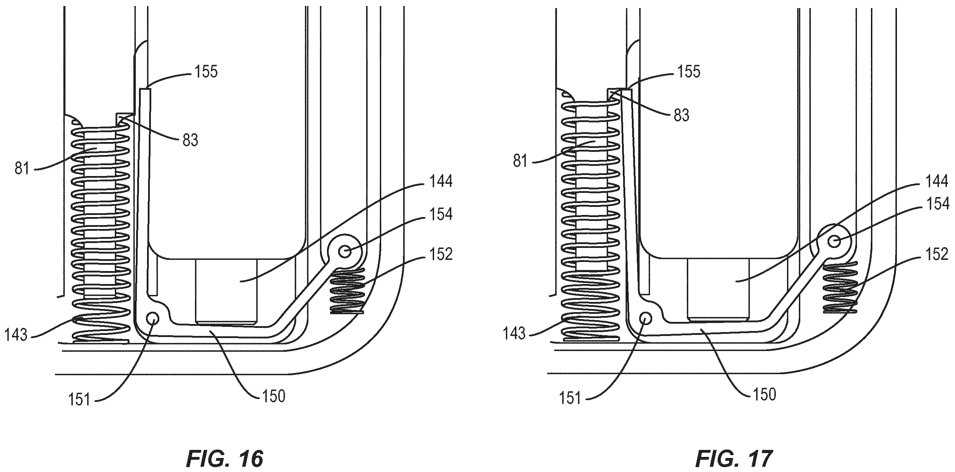

When the passenger applies a force to the button 56, the force is transferred to the damper 141. The damper 141 contacts the catch 150 along the first leg and causes the catch 150 to pivot about the pivot point 151 from the first position (Figure 15) to an open position as illustrated in Figure 16. The movement of the catch 150 compresses the spring 152 and causes the opposing end 155 to move away from the frame 81. This movement enables the frame 81 to move downward such that the boss 82 aligns with the slot 74 to allow for the handle to rotate and unlock the lock.

If the delay assembly 140 is not operating correctly, the force applied to the button 56 does not cause the cylinder 144 to move downward. This results in the catch 150 remaining in the first position. As illustrated in Figure 17, this causes the end 155 of the catch 150 to contact against the frame 81 as the passenger applies the force to the button 56. The contact with the end 155 prevents the frame 81 from moving downward beyond a predetermined point. This prevents the boss 82 from aligning with the slot 74 and therefore the rear handle 55 cannot be rotated and the lock 30 cannot be unlocked. In some examples, the contact between the catch 150 and the frame 81 occurs between the end 155 and a notch 83 in the frame 81.

In some examples as illustrated, the spring 152 is a compression spring that is positioned under the end 154. In other examples, the spring 152 is an extension spring positioned above the end 154 and which applies an upward force to the end 154.

The lock 30 is also configured to be unlocked in the event of failure of the other locking components. For example, in the event the rotary bolt 60 fails to move from the locked position to the unlocked position. As illustrated in Figures 4A, 4B, fasteners 160 are mounted to the strike section 40 to secure the front section 44 and the rear section 45 together. One or more of the fasteners 160 are inserted from the front side 41 of the strike section 40 and one or more fasteners 160 are inserted from the rear side 42 of the strike section 40. The example of Figures 4A and 4B include two fasteners inserted from the front side 41 and three fasteners 160 inserted from the rear side 42.

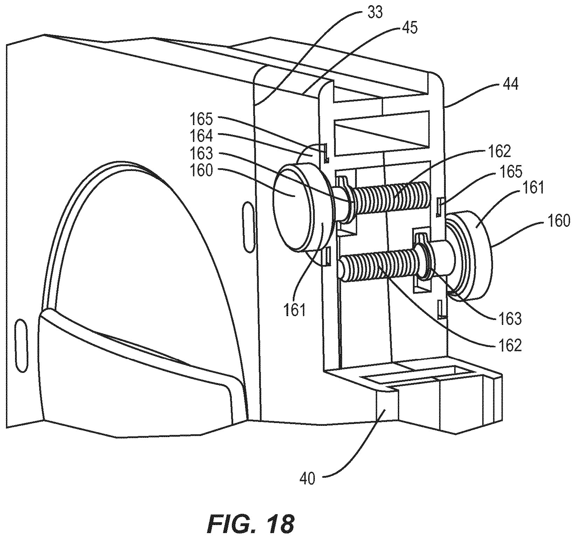

Figure 18 illustrates a cut-away view of a strike section 40 to illustrate fasteners 160 mounted from each direction. The fasteners 160 include an enlarged head 161 and a threaded shaft 162. In the event of failure of the rotary bolt 60 to unlock, the threaded fasteners 160 can be removed and/or loosened to separate the front section 44 and rear section 45. This enlarges the size of the receptacle 43 and provides for the rotary bolt 60 to be removed from the receptacle 43 and to open the lock 30. The fasteners 160 are configured to be rotated multiple times to loosen the front section 44 and rear section 45. The rotation of the fasteners 160 causes a time delay such that the passenger is not able to immediately unlock the lock 30 and then open the barrier door 20.

In some examples, the fasteners 160 include retaining rings 163 positioned on the threaded shafts 162. The retaining rings 163 are configured to bind the threaded shaft 162 after a number of rotations. This requires the user to sequentially rotate each of the fasteners 160 a limited amount such that the fasteners 160 are loosened in equal discrete amounts. For example, the first fastener 160 is unscrewed three rotations, followed by the second fastener 160 unscrewed three rotations, followed by the third fastener 160 unscrewed three rotations. This sequential rotation of the fasteners 160 keeps the retaining rings 163 aligned relative to their respective threaded shafts 162. Once the first set of rotations is complete, the fasteners 160 are again sequentially rotated to unscrew additional limited amounts. This sequential rotation requirement further increases the amount of time for a passenger to open the lock 30 and open the barrier door 20.

In some examples, the fasteners 160 also include flanges 164 that extend radially outward beyond the head 161 and threaded shaft 162. The face of the strike section 40 where the fasteners 160 are mounted includes a colored indicator 165. When the fastener 160 is fully tightened, the flange 164 extends over and visually obscures the colored indicator 165. When the fastener 160 is unscrewed, the flange 164 on the fastener 160 moves away from the colored indicator 165 thus causing the colored indicator 165 to become visible. This enables a person to quickly view the lock 30 and determine if it has been tampered with and/or the fasteners 160 unscrewed. For example, during flight a crew member walking through the opening 113 can view the lock 30 to determine if there has been tampering.

In other examples, the fasteners 160 include a groove under the head 161. A color indicator 165 is positioned in the groove. The color indicator 165 is positioned sub-flush to the surface of the strike body 49. Movement of the fasteners 160 such as being unscrewed results in the color indicator 165 being visible.

In some examples, the lock 30 is configured with visual indicators to visually display whether the lock 30 is unlocked or locked. As illustrated in Figures 4A and 4B, both of the front side 31 and the rear side 32 include one or more windows that indicate the status. Figure 4A illustrates the front side 31 of the lock 30 with two indicators 34, 35. Figure 4B illustrates the rear side 32 of the lock 30 which includes windows 36, 37. The number of windows and positioning on the lock 30 can vary.

In some examples, the rotary bolt 60 includes indicators that align with the windows based on the rotational position. In one example illustrated in Figure 10, the rotary bolt 60 includes a first indicator 65 that has a first color (e.g., green) and a second indicator 66 that has a different second color (e.g., red). When the rotary bolt 60 is in an unlocked position, one of the indicators 65, 66 is aligned with one of the windows to visually indicator the position. Likewise, when the rotary bolt is in a locked position, the other of the indicators is aligned with one of the windows. In one example, the green indicator is aligned with a window when the lock 30 is locked, and a red indicator is aligned with a window when the lock 30 is unlocked. Figure 10 illustrates indicators 65, 66 on a first side of the rotary bolt 60. This provides for a visual indication to one side of the lock 30 (e.g., the front side 31 or the rear side 32). In some examples, indicators are also positioned on the other side of the rotary bolt 60 to align with windows on the other side of the lock 30. In some examples, the indicators and windows are the same on both the front side 31 and rear side 32. Other examples include different windows and/or indicators on the two sides 31, 32.

The time delay component (e.g., delay assembly 140) can also include a visual indicator. In one example, the time delay indicator is only visible on the rear side 32 of the lock 30. As illustrated in Figure 4B, a window 37 is positioned on the rear side 32 of the lock 30. In some examples, the time delay window 37 is positioned in closer proximity to the button 56 to provide a visual clue to the passenger. As illustrated in Figures 13-13C, the frame 81 of the lock bar assembly 80 includes indicators 93 aligned in a vertical row. Each of the indicators has a different visual appearance, such as a different color. During use when the passenger is applying a force to the button 56 and the frame 81 is slowly moving, the different indicators 93 align with and are visible in the window 37. This provides a visual indication to the user about the time remaining until the lock 30 can be unlocked. In one example, the first indicator 93 is red indicating the locked position, the second indicator is yellow indicating the frame 81 is moving, and the third indicator is green indicating the lock 30 is able to be unlocked. In another example, the indicator includes three circles with different amounts of the circle filled. The amount of fill within the circle indicates the amount of remaining time until the lock 30 can be unlocked.

The barrier door 20 can be mounted in the cabin area 103 in a variety of different manners. The barrier door 20 can be mounted to one or more of the monuments 112, floor, and ceiling. In some examples, the barrier door 20 is mounted to just the floor and/or ceiling of the cabin area 103. The barrier door 20 is not mounted to the monuments 112.. In some examples, this mounting provides for a barrier door 20 to be installed on existing aircraft 100 without changing the monuments 112.

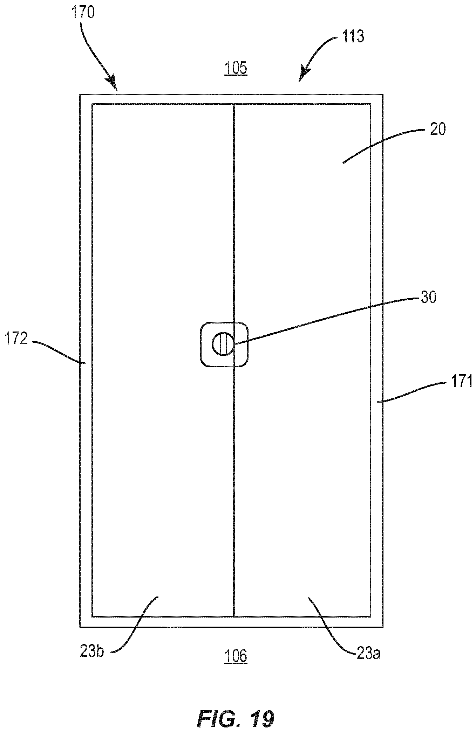

In some examples as illustrated in Figure 19, the barrier door 20 is part of a door assembly 170. The door assembly 170 includes the barrier door 20 with the lock 30 and a frame 171. A hinge 172 connects the barrier door 20 to the frame 171 and enables for pivoting movement relative to the opening 113. The barrier door 20 mounted in a frame that is mounted at the opening 113. In some examples as illustrated in Figure 19, the frame 171 extends completely around the barrier door 20. In other examples, the frame 171 extends around a limited portion of the barrier door 20. In one example, the frame 171 extends around a single side of the barrier door 20, such as a threshold that connects to the floor 106, and a pair of opposing sides that extend along the lateral sides of the barrier door 20. In some examples, the frame 171 is connected to the ceiling 105.

In some examples, the barrier door 20 is arranged to move between the folded (also referred to as stowed position) and extended configurations (also referred to as deployed position) in a certain direction. This provides for structural stability in the event that a passenger applies pressure to the door from the passenger section 121. In one example, the panels 23 fold towards the passenger section when moving from the deployed position to the stowed position.

As illustrated in Figure 3A, the barrier door 20 is positioned completely out of the opening 113 when in the stowed position. This protects the panels 23 from being damaged such as by being hit by luggage carried by passengers, galley carts being pushed through the opening 113, and persons as they walk through the opening 113. In other examples, the barrier door 20 is partially within the opening 113 in the stowed position.

The barrier door 20 includes multiple panels 23 that are connected together by hinges. In some examples, the barrier door 20 includes two panels 23 (e.g., first panel 23a, second panel 23b) that are connected along inner edges by a hinge 25. In other examples, the barrier door 20 includes three or more panels 23 that are connected by hinges 25.

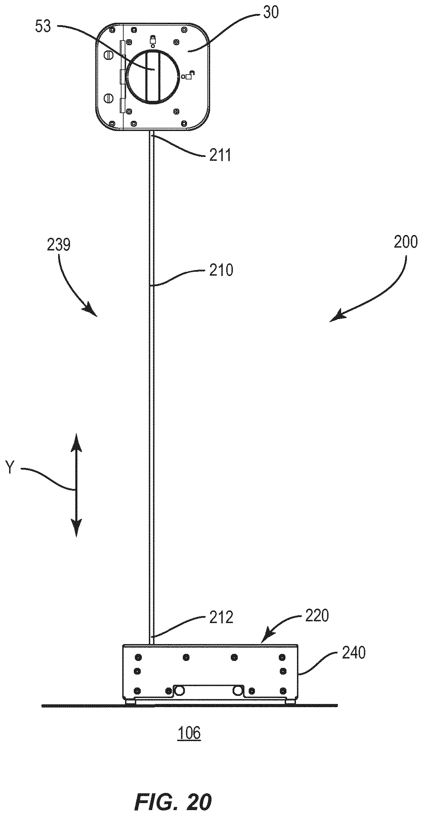

In some examples, the barrier door 20 is equipped with an engagement assembly 200 as illustrated in Figure 20. The engagement assembly 200 generally includes an elongated arm (also referred as elongated member) 210 and a lock mechanism 220. The engagement assembly 200 is activated by the lock 30 and engages with the floor 106 of the cabin area 103 when the lock 30 is locked. The engagement assembly 200 further secures the barrier door 20 in the deployed position and prevents a passenger from moving through the opening 113 prior to unlocking and opening the barrier door 20. The elongated arm 210 and components of the lock mechanism 220 form an actuator 239 that moves one or more plungers into engaged and disengaged positions.

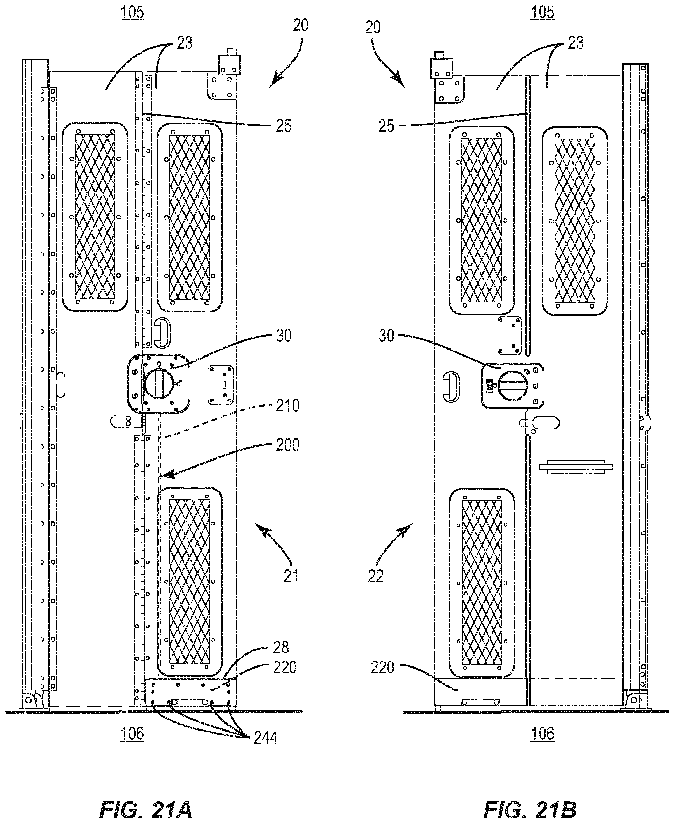

Figures 21A and 21B illustrate the barrier door 20 equipped with the engagement assembly 200. In some examples, the elongated arm 210 is positioned on the front side 21 of the barrier door 20. This placement prevents a passenger in the passenger section 121 from accessing the elongated arm 210 and potentially destroying the elongated arm 210 or otherwise unlocking the engagement assembly 200. In some examples, the elongated arm 210 has a straight shape and is positioned at the hinge 25 of the barrier door 20. This placement does not interfere with the panels 23 and allows the panels 23 to fold between the folded and extended configurations.

In some examples, the lock mechanism 220 is mounted to the lower section of the door 20. In some examples, the lock mechanism 220 is mounted on just a single panel 23. This enables the panels 23 to have the pivoting movement between the folded and extended configurations. In some examples, the panel 23 includes a notch 28 at the lower edge. The notch is sized to receive the lock mechanism 220. As illustrated in Figures 21A and 21B, the lock mechanism 220 is exposed on both the front side 21 and the rear side 22 of the barrier door 20. This provides for accessing the interior of the lock mechanism 220 in the event of a failure that prevents unlocking of the engagement assembly 200.

The elongated arm 210 extends between the lock 30 and the lock mechanism 220. As illustrated in Figure 20, the elongated arm 210 includes a first end 211 at the lock 30 and a second end 212 at the lock mechanism 220. The elongated arm 210 is configured to move relative to the barrier door 20 in opposing directions as illustrated by arrow Y in Figure 20. The elongated arm 210 moves axially and remains aligned with the hinge 25 to enable the folding movement of the panels 23 between the folded and extended configurations.

The elongated arm 210 is connected to the lock 30 and moves due to the rotation of the lock 30 - e.g., due to the rotation of the handle 53. In some examples, the elongated arm 210 is connected to the handle 53. Rotation of the handle 53 to the locked position causes the elongated arm 210 to move in a first direction. This movement in turn causes the lock mechanism 220 to deploy to engage with the floor 106 (e.g., using the one or more plunger(s) 226). Rotation of the handle 53 to the unlocked position causes the elongated arm 210 to move in an opposing second direction to disengage the lock mechanism 220 from the floor 106 (e.g., using the one or more plunger(s) 226). Because the handle 53 provides the force for moving both the lock 30 and the engagement assembly 200, the locking and unlocking of both the lock 30 and engagement assembly 200 occurs simultaneously. In some examples, the engagement assembly 200 is configured to simultaneously position the plunger 226 in the extended position when the lock 30 is moved to the locked position. Conversely, the engagement assembly 200 is configured to simultaneously position the plunger 226 in the retracted position when the lock 30 is moved to the unlocked position. This can be done, for example, by simultaneously moving the elongated arm 210 of the engagement assembly 200 that is connected to the door 20 (and lock 30) and the lock mechanism 220 deploying the plunger 226.

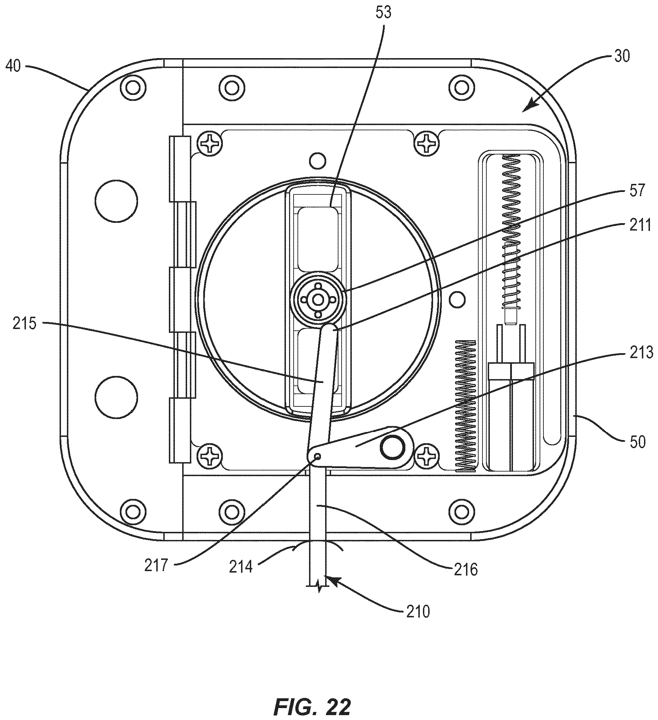

In some examples, the elongated arm 210 is a single member, such as a single elongated rod. Other examples include the elongated arm 210 constructed from two or more different members that are connected together. Figure 22 illustrates the elongated arm 210 constructed from a first section 215 and a second section 216. The first section 215 and second section 216 are connected together by a fastener at a pivot point 217. The first section 215 engages with the lock 30 and aligns in different angular positions relative to the barrier door 20 due to the rotation of the handle 53. The second section 216 maintains the same angular position relative to the barrier door 20. During rotation of the handle, the first section 215 pivots about the pivot point 217. The second section 216 moves axially along the barrier door 20 and maintains the same angular position. In some examples, the first section 215 is positioned within a housing that extends around the lock 30, and the second section 216 extends along the face of the barrier door 20. In one example, the second section 216 is aligned with a hinge 25 that connects two panels 23 of the barrier door 20.

In some examples, the elongated arm 210 is connected to the handle 53 of the lock 30. Rotation of the handle 53 between the locked and unlocked positions causes axial movement of the first section 215 which is then transferred to the second section 216. In other examples, the first end 211 is connected to a shaft 57 that extends between the front handle 54 and the rear handle 55. In other examples, the elongated arm 210 is engaged with the rotary bolt 60. In one specific example, the first end 211 rides along the outer perimeter of the rotary bolt 60. Rotation of the rotary bolt 60 between the locked and unlocked position causes axial movement of the elongated arm 210. In yet another example, the elongated arm 210 includes a handle such as a knob that is exposed on the front side 21 of the barrier door 20. A crew member is able to grasp the knob and apply the force to axially position the elongated arm 210.

In some examples, an idler arm 213 is connected to the elongated arm 210. The idler arm 213 is also pivotally connected to the latch section 50 of the lock 30. The idler arm 213 pivots during axial movement of the elongated arm 210 and supports the elongated arm 210 during the axial movement. In some examples, the idler arm 213 is connected at the pivot point 217 of the elongated arm 210 where the first section 215 and the second section 216 are connected together.

In some examples, the elongated arm 210 extends along the front side 21 of the barrier door 20. The elongated arm 210 is positioned in a sheath 214 that is mounted to the barrier door 20 and extends between the lock 30 and lock mechanism 220. The sheath 214 shields the elongated arm 210 to prevent tampering that could prevent operation of the engagement assembly 200. The sheath 214 also protects the elongated arm 210 as passengers and crew members walk through the opening 113 when the barrier door 20 is open. In other examples, the elongated arm 210 extends through an interior of the barrier door 20.

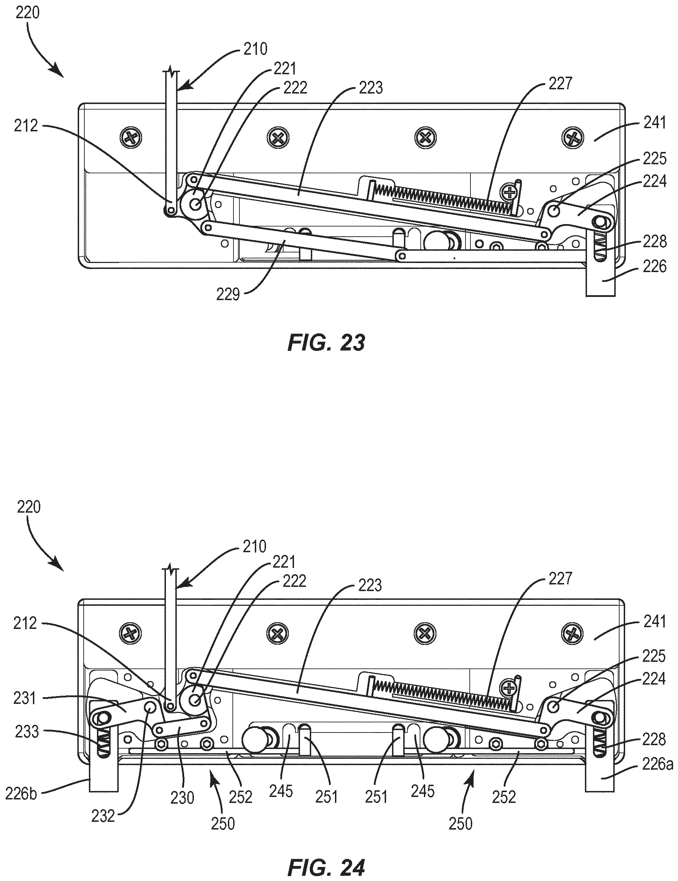

The second end 212 of the elongated arm 210 is connected to the lock mechanism 220. As illustrated in Figure 23, the lock mechanism 220 includes a housing with a first section 241 that supports the components of the lock mechanism 220. The components include a connector (also referred to as first connector) 221 that is pivotally mounted at a pivot point 222. An arm (also referred to as elongated arm) 223 connects the connector 221 to a second connector 224 that is pivotally mounted at pivot point 225. A plunger 226 is connected to an opposing side of the (second) connector 224. In some examples, the first connector 221 is pivotally connected to the elongated member 210, the second connector 224 is pivotally connected to the plunger 226, and the elongated arm 223 extends between the first connector 221 and the second connector 224. In operation, with the lock 30 in the locked position (for example switching/moving the lock 30 from the unlocked position to the locked position), the first connector 221 and the second connector 224 are pivoted in a first direction to position the plunger 226 in the extended position. Conversely, with the lock 30 in the unlocked position (for example switching/moving the lock 30 from the locked position to the unlocked position), the first connector 221 and the second connector 224 are pivoted in a second direction to position the plunger 226 in the retracted position.

In some examples, the lock mechanism 220 is engaged by axially moving the elongated arm 210 from a first axial position to a second axial position during rotation of the handle 53. This axial movement causes the connector 221 to pivot about pivot point 222 and pull the arm 223. Movement of the arm 223 in turn causes the connector 224 to pivot about the pivot point 225 which in turn causes the plunger 226 to extend outward and engage with the floor 106. The lock mechanism 220 is disengaged in a reverse order by rotating the handle 53 in an opposing direction. This movement causes the elongated arm 210 to axially move along the barrier door 20 from the second position to the first position. This movement rotates the connector 221 in an opposing direction about the pivot point 222. This causes the arm 223 to move in the opposing direction and the connector 224 to move about the pivot point 225 in the opposing direction. This in turn causes the plunger 226 to move upward and disengage from the floor 106.

In some examples, the plunger 226 extends outward from a bottom edge (also referred as lower edge) of the barrier door 20 in the engaged position. The plunger 226 extends outward an amount to engage with the floor and/or a frame at the opening 113. A spring 228 acts on the plunger 226 to cause the plunger 226 to extend out different amounts to engage with the floor 106. The different amounts are caused by deflections in the floor 106 and/or installation tolerances of the opening 113.

In some examples, the lock mechanism 220 includes a spring 227 attached to the arm 223. The spring 227 biases the arm 223 for the plunger 226 to default to the disengaged position.

In some examples, a lockout arm 229 comprising one or more sections extends between the connector 221 and the plunger 226. The lockout arm 229 secures the plunger 226 in the engaged position. The lockout arm 229 releases the plunger 226 when the elongated arm 210 is moved to the second position due to rotation of the connector 221. In other examples, the lock mechanism 220 does not include a lockout arm 229.

In some examples as illustrated in Figure 23, the lock mechanism 220 includes a single plunger 226. In other examples as illustrated in Figure 24, the lock mechanism 220 includes a pair of plungers 226a, 226b. In addition to the components that enable movement of the first plunger 226a, the lock mechanism 220 includes components that enable movement of the second plunger 226b. An arm 230 is connected to and positioned between the connector 221 and connector 231. Connector 231 pivots about pivot point 232 and is connected to the second plunger 226b. Movement of the elongated arm 210 in the first direction causes the arm 230 to pull and pivot connector 231 about the pivot point 232 causing the plunger 226b to be extended outward. Movement of the elongated arm 210 in the opposing second direction causes the plunger 226b to retract to a disengaged position. In the example of Figure 24, the plungers 226a, 226b are spaced apart on the lock mechanism 220 to provide for secure engagement to maintain the barrier door 20 in the extended position. In other examples, the plungers 226 are at different relative positions. In some examples, a spring 233 acts on the plunger 226b to cause the plunger 226b to extend outward different amounts depending upon the opening 113.

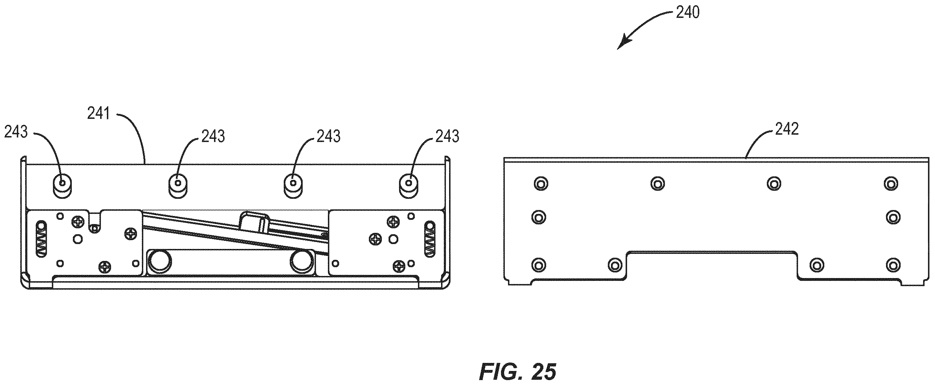

In some examples, the lock mechanism 220 is mounted in a housing 240 that is secured to the bottom of the barrier door 20. As illustrated in Figure 25, the housing 240 includes the first section 241 and a second section 242. In some examples, the first section 241 has a depth and is configured to contain the components of the lock mechanism 220. The second section 242 is a cover plate that attaches to the first section 241. The first section 241 includes bosses 243 that extend outward and are configured to fit within corresponding holes in the barrier door 20. The second section 242 includes openings that align with the bosses and receive fasteners 244 to secure the sections 241, 242 together and secure the lock mechanism 220 to the barrier door 20.

In some examples as illustrated in Figures 21A and 21B, the fasteners 244 are inserted into the housing 240 from the front side 21 of the barrier door 20. This position locates the enlarged heads of the fasteners 244 on the front side 21. In the event that the engagement assembly 200 malfunctions and remains in the locked position, a crew member can unscrew the fasteners 244 and access the components of the lock mechanism 220 to move the one or more plungers 226 to a disengaged position. The heads of the fasteners 244 are not accessible from the rear side 22 of the barrier door 20 and therefore a passenger cannot open the housing 240 and disengage the lock mechanism 220. In other examples, one or more of the fasteners 244 extend inward from the passenger section 121. This enables a passenger to unscrew the fasteners 244 and unlock the lock mechanism 220 in the event of an issue.

The lock mechanism 220 can be equipped to secure the one or more plungers 226 in the disengaged position. As illustrated in Figure 24, a securing member 250 is positioned at each plunger 226. The securing member 250 includes a lockout pin 251 and an arm 252. During use, the plunger 226 is manually moved to the disengaged position, and the securing member 250 is slid into engagement with the plunger 226, such as being extended underneath the plunger 226. The plunger 226 is released and contacts against the arm 252 causing the lockout pin 251 to engage in a receptacle 245 formed in the first section 241. This engagement prevents the plunger 226 from moving to the extended position. In some examples, a crew member engages the securing member 250 in the event the engagement assembly 200 malfunctions and remains in an engaged position.

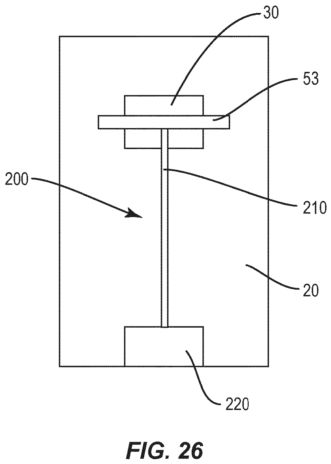

The barrier door 20 can be equipped with a variety of different locks 30 that enable functioning of the engagement assembly 200. In some examples, the lock 30 includes a hinged configuration with a rotating rotary bolt 60 and cam member 70 as disclosed above. The lock 30 can also include various other configurations that provide for rotational movement to lock and unlock the barrier door 20. The rotational movement also provides for engaging and disengaging the floor engagement assembly. Figure 26 illustrates an example with the engagement assembly 200 connected to the lock 30. The lock 30 includes the handle 53 that rotates to move the elongated arm 210 and engage and disengages the lock mechanism 220.

The barrier door 20 can also include different constructions. In some examples, the barrier door 20 includes panels 23 that are pivotally connected together to move between a folded configuration and an extended configuration. In other examples, the barrier door 20 has a single piece construction.

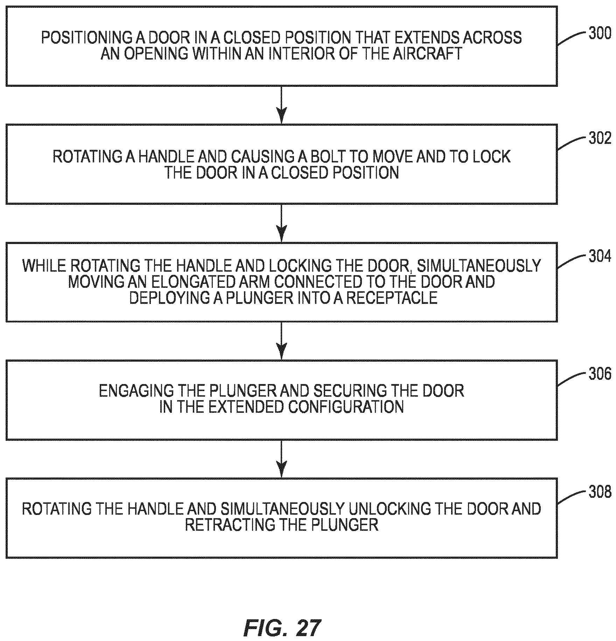

Figure 27 illustrates an example method of operating the door assembly in the opening 113. As an example of such method, Figure 27 may relate to a method of controlling access to the flight deck 110 within the aircraft 100. The method includes positioning the barrier door 20 in a closed position (e.g., deployed position) that extends across the opening 113 - for example, the opening 113 within the interior of the aircraft 100 (block 300). The lock 30 is rotated to lock the barrier door 20 in the closed position. In some examples, the handle 53 is rotated causing the bolt 60 to move and to lock the barrier door 20 in the closed position (block 302). While rotating the lock 30 and locking the barrier door 20, the method includes simultaneously moving the elongated arm 210 that is connected to the barrier door 20 and deploying the plunger 226 outwardly from the barrier door 20. In some examples, while rotating the handle 53 and locking the barrier door 20, the method includes simultaneously moving the elongated arm 210 that is connected to the barrier door 20 and deploying the plunger 226 into a receptacle at the opening 113 at a point away from the bolt 60 (block 304). The engagement of the plunger 226 further secures the barrier door 20 in the extended (e.g., deployed) configuration (block 306). While the barrier door 20 is in the closed position, rotating the lock 30 and simultaneously unlocking the barrier door 20 and retracting the plunger 226. In some examples, while the barrier door 20 is in the closed position, rotating the handle 53 and simultaneously unlocking the door 20 and retracting the plunger 226 (block 308).

In some examples, the engagement assembly 200 is integrated into the barrier door 20 during manufacturing. In other examples, the engagement assembly 200 is separate from the barrier door 20 and added at some time after manufacturing. For example, the engagement assembly 200 is added to the existing barrier door 20 that is already mounted in the aircraft 100. This enables retrofitting existing aircraft 100 that already in service. In other examples, the barrier door 20 is equipped with the engagement assembly 200 prior to installation in the aircraft 100.

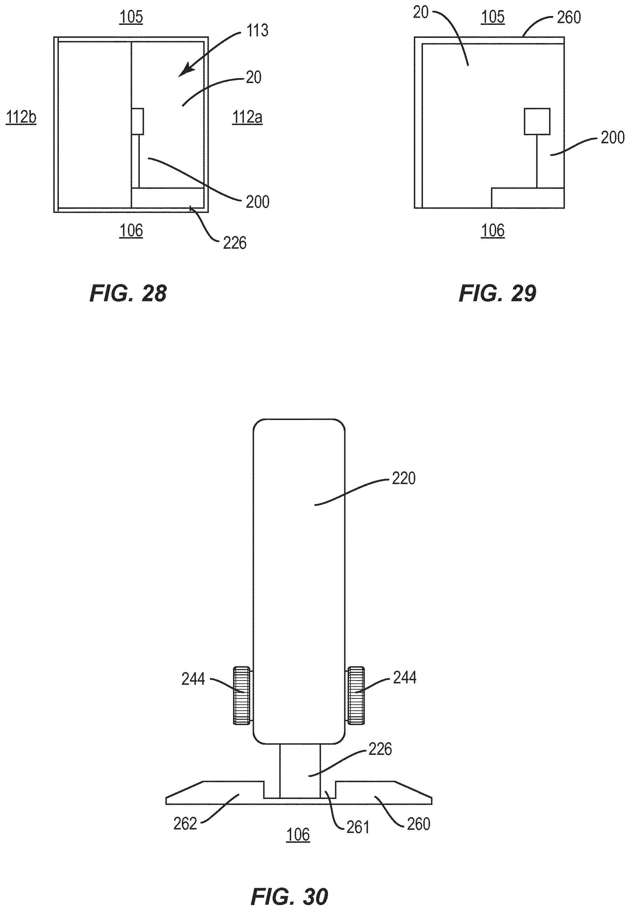

The barrier door 20 is mounted in the opening 113 in a variety of different manners. Figure 28 includes an example with the barrier door 20 mounted to the floor 106 and ceiling 105 at the opening 113. The barrier door 20 is not mounted to the lateral sides formed by monuments 112a, 112b. The plunger 226 of the engagement assembly 200 extends outward to engage with the floor 106.

In some examples, the barrier door 20 is mounted to a frame 260. The frame 260 is configured to mount to one or more of the floor 106, ceiling 105, and lateral sides of the opening 113. The frame 260 can extend completely or partially around the barrier door 20. Figure 29 illustrates an example with the frame 260 extending completely around the barrier door 20.

In some examples, the frame 260 includes a threshold 262 configured to be mounted to the floor 106. As illustrated in Figure 29, the threshold 262 includes one or more receptacles 261 that receive the one or more plungers 226 in the engaged position (the one or more receptacles 261 are sized to receive the one or more plungers 226). The receptacles 261 include sidewalls that prevent the plunger 226 from escaping while in the deployed position. In one example as illustrated in Figure 30, the sidewalls have a dovetail shape. In another example, the sidewalls are flat. In some examples, the frame 260 includes just a threshold 262. In other examples, the frame 260 includes the threshold 262 that extends along the bottom of the barrier door 20 and one or more sections that extend along at least one of the lateral sides and the top side of the barrier door 20.

In other examples, the barrier door 20 is mounted to one or more of the monuments 112.

In some examples, the engagement assembly 200 is configured to engage with the floor 106. In other examples, the engagement assembly 200 engages with other sides of the opening 113, such as the ceiling 105 or lateral side. In some examples, the engagement assembly 200 engages with the frame 260 that is mounted in the opening 113. Some examples include the engagement assembly 200 engaging with two or more different sides, such as with the floor 106 and a lateral side.

In some examples, the barrier door 20 is positioned completely out of the opening 113 when in the stowed position. This protects the panels 23 from being damaged such as by being hit by luggage carried by passengers, galley carts being pushed through the opening 113, and persons as they walk through the opening 113. In other examples, the barrier door 20 is at least partially within the opening 113 in the stowed position.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A door assembly (170) configured to be mounted in an opening (113) of a cabin area (103) of an aircraft (100), the door assembly (170) comprising:
a door (20) configured to be movable between a deployed position across the opening (113) and a stowed position out of the opening (113);
a lock (30) mounted to the door (20) and movable between a locked position and an unlocked position;
an engagement assembly (200) mounted to the door (20) and movable between an engaged position and a disengaged position, the engagement assembly (200) comprising:
a plunger (226);
a lock mechanism (220); and
an elongated member (210) that extends between the lock (30) and the lock mechanism (220);
wherein in the engaged position of the engagement assembly (200), the lock mechanism (220) and the elongated member (210) position the plunger (226) in an extended position outward from the door (20); and
wherein in the disengaged position of the engagement assembly (200), the lock mechanism (220) and the elongated member (210) position the plunger (226) in a retracted position relative to the door (20).

2. The door assembly (170) of claim 1, wherein the engagement assembly (200) is configured to move between the engaged position and the disengaged position based on the position of the lock (30).

3. The door assembly (170) of claim 1 or 2, wherein the elongated member (210) is a rod with a first end (211) that is engaged with the lock (30) and a second end (212) that is engaged with the lock mechanism (220), the rod being movable relative to the door (20).

4. The door assembly (170) of any one of claims 1 to 3, wherein the door (20) comprises a front side (21) and a rear side (22), wherein the elongated member (210) is positioned on the front side (21) and is not exposed on the rear side (22).

5. The door assembly (170) of any one of claims 1 to 4, wherein the door (20) comprises a plurality of panels (23) that are pivotally connected at one or more hinges (25), wherein the elongated member (210) is aligned with one of the hinges (25) to enable the panels (23) to pivot between a folded configuration and an extended configuration.

6. The door assembly (170) of any one of claims 1 to 5, wherein the door (20) comprises a plurality of panels (23) that are pivotally connected together and the lock mechanism (220) is mounted to one of the panels (23) to enable the plurality of panels (23) to fold together in the stowed position of the door (20).

7. The door assembly (170) of claim 5 or 6, wherein the pivotally connected panels (23) are configured to move between the extended configuration in the deployed position of the door (20) to extend across the opening (113) and the folded configuration in the stowed position of the door (20).

8. The door assembly (170) of any one of claims 1 to 7, wherein the plunger (226) is a first plunger (226a) and further comprising a second plunger (226b) wherein the first plunger (226a) and the second plunger (226b) are spaced apart along a lower edge of the door (20).

9. The door assembly (170) of any one of claims 1 to 8, wherein the lock mechanism (220) comprises:
a first connector (221) pivotally connected to the elongated member (210);
a second connector (224) pivotally connected to the plunger (226);
an elongated arm (223) that extends between the first connector (221) and the second connector (224);
wherein with the lock (30) in the locked position, the first connector (221) and the second connector (224) are pivoted in a first direction to position the plunger (226) in the extended position; and
wherein with the lock (30) in the unlocked position, the first connector (221) and the second connector (224) are pivoted in a second direction to position the plunger (226) in the retracted position.

10. The door assembly (170) of any one of claims 1 to 9, further comprising a frame (260) configured to engage with the door (20) to mount the door (20) in the opening (113), the frame (260) comprising at least a threshold (262) that is engaged by the plunger (226) in the extended position.

11. The door assembly (170) of claim 10, wherein the threshold (262) comprises at least one receptacle (261) sized to receive the plunger (226) in the extended position.

12. The door assembly (170) of any one of claims 1 to 11, wherein the engagement assembly (200) is configured to simultaneously position the plunger (226) in the extended position when the lock (30) is moved to the locked position.

13. The door assembly (170) of any one of claims 1 to 12, wherein the lock (30) comprises a handle (53) that is rotatable relative to the door (20) and the elongated member (210) is connected to the handle (53).

14. A method of operating a door assembly (170) of claim 1 in an opening (113), the method comprising:
positioning the door (20) in the deployed position that extends across the opening (113);
rotating the lock (30) on the door (20) and locking the door (20) in the deployed position;
while rotating the lock (30) and locking the door (20), simultaneously moving the elongated arm (210) that is connected to the door (20) and deploying the plunger (226) outwardly from the door (20) and further securing the door (20) in the deployed position; and
while the door (20) is in the deployed position, rotating the lock (30) and simultaneously unlocking the door (20) and retracting the plunger (226).

15. The method of claim 14, further comprising unfolding panels (23) of the door (20) to an extended configuration and positioning the door (20) in the deployed position.
